# EUROPEAN PATENT SPECIFICATION

(11) **EP 0 319 113 B1**
(45) Date of publication and mention of the grant of the patent: **27.04.1994**
(21) Application number: 88202747.7
(22) Date of filing: 30.11.1988
(51) Int. Cl.: C08L 73/00, C08L 25/00

(54) **Polyketone polymer composition**
Polyketonpolymerzusammensetzung
Composition de polymères de polycétone

(30) Priority: 04.12.1987 US 129124
(43) Date of publication of application: 07.06.1989
(73) Proprietor: SHELL INTERNATIONALE RESEARCH MAATSCHAPPIJ B.V., 2596 HR Den Haag (NL)
(72) Inventor: Handlin, Dale Lee, Jr., Houston Texas 77077 (US)

(56) References cited:
- PATENT ABSTRACTS OF JAPAN, vol. 10, no. 67 (C-333)[2124], 15th March 1986;& JP-A-60 206 837 (NIPPON ZEON K.K.) 18-10-1985

## Description

This invention is concerned with a polyketone polymer composition and with a process for preparing this composition.

The general class of polymers of carbon monoxide and one or more ethylenically unsaturated hydrocarbons has been known for some years.

More recently, the class of linear alternating polymers of carbon monoxide and unsaturated hydrocarbons, now known as polyketones, has become of greater interest, in part because of improved methods of production. Such methods are illustrated by European Patent Applications 181,014 and 121,965. The resulting polymers are generally high molecular weight thermoplastic polymers having utility in the production of articles such as containers for food and drink and parts for the automotive industry or structural members for use in the construction industry.

Although the polyketone polymers are excellently suited for many uses, it is sometimes required, especially in engineering applications, to dispose of materials having carefully controlled physical properties. It is often preferred that these properties are as homogeneous as possible, i.e. any blend formed should be as fine as possible. Thus molecular blends of polymers are preferred, when blending one polymer with another with the aim of modifying the physical properties of one or both.

Even though there have been disclosed numerous processes for preparing polyketones, the polyketones have generally not been blended with other substances to form molecularly miscible blends.

It has been long desired to provide molecularly miscible blends of polyketones and other polymers, especially with the object to provide substances with good creep and modulus properties.

It has now been found that polyketones can be blended molecularly with polyvinylphenols, to substances having interesting physical properties.

Accordingly, the invention relates to a polyketone polymer composition characterized in comprising a molecularly miscible blend of polyvinylphenol with at least one linear alternating polymer of carbon monoxide and one or more ethylenically unsaturated hydrocarbons.

The physical properties of the polyketone polymer usable in the molecularly miscible blends will be determined in part by the molecular weight and by whether the polymer is a copolymer or a terpolymer. Typical melting points are from 175°C to 300°C, more typically from 210°C to 280°C. Polyketone polymers usable herein have preferred melting points of 196-225°C though polymers with melting points ranging from 180 to 280°C, such as 260°C, may be usable herein.

The structure of the preferred polyketone polymers is that of a linear alternating polymer of carbon monoxide, ethylene and any second ethylenically unsaturated hydrocarbon. When terpolymers of carbon monoxide, ethylene and a second ethylenically unsaturated hydrocarbon, e.g., a hydrocarbon of 3 to 8 carbon atoms, are produced, there will be at least two units incorporating moieties of ethylene per unit incorporating a moiety of the second unsaturated hydrocarbon, preferably from 10 units to 100 units incorporating moieties of ethylene per unit incorporating a moiety of the second unsaturated hydrocarbon. The polymer chain of the preferred class of polymers is illustrated by the formula 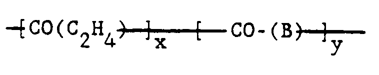
wherein B is the moiety obtained by polymerization of the second ethylenically unsaturated hydrocarbon through the ethylenic unsaturation. The -CO(C₂H₄)̵ units and the -CO(B)̵ units occur randomly throughout the polymer molecule and the ratio of y:x is no more than 0.5. In the modification of the invention which employs copolymers of carbon monoxide and ethylene without the presence of a second ethylenically unsaturated hydrocarbon, the term y=0 and the ratio of y:x is also 0. When terpolymers are employed, i.e., y is greater than 0, ratios of y:x from 0.01 to 0.1 are preferred. The end groups or "caps" of the polymer chain will depend on the particular materials present during its production and whether and how the polymer has been purified. The precise nature of the end groups is of little significance with regard to the overall properties of the polymer so that the polymer is fairly represented by the polymer chain as depicted above.

Useful polyketones for molecularly miscible blends have limiting viscosity numbers (LVN) as measured by the method wherein the polymer is dissolved in metacresol at 60°C, using a standard capillary viscosity measuring device (such as a Cannon-Ubbelohde viscometer), in the range of 0.5 to 10 LVN, more preferably 0.8 to 4 LVN and most preferably 0.8 to 2.5 LVN.

Polyketone powders usable to make the present molecularly miscible blends possess a degree of crystallinity ranging from 25% to 80% crystallinity, more preferably from 30% to 50%, and most preferably 40% crystallinity, as determined by the following formula using the heat of fusion value "HF" (expressed in cal/gram) as obtained from a DSC (Differential Scanning Calorimeter) testing unit. 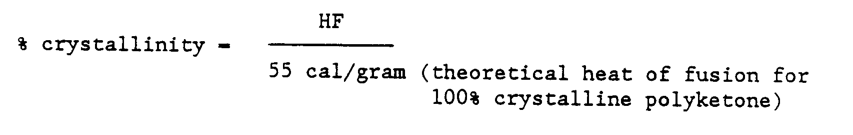
Molecularly miscible blends are herein defined as blends, which, although they can be separated by conventional techniques, present during various forms of testing, only one value. More specifically, molecularly miscible blends present one glass transition temperature (Tg) as measured by Dynamic Mechanical Analysis (DMTA - wherein the polymers are vibrated to detect changes in the modulus of the polymer blend with temperature). Large scale phase separation does not occur with molecularly miscible blends.

For polyketone blends, two types of blending can occur. "Completely amorphous" blending can occur, wherein neither component crystallizes and the substances exist in a one-phase, molecularly mixed system. "Semicrystalline" blending can occur if some crystallinity occurs in the (components of the) polyketone while maintaining a blend of the amorphous phases of the components.

It has been found in accordance with the instant invention that the desired molecularly miscible blends can be obtained by blending together a compatible mixture of (a) a polyketone polymer such as one of the types described above, with (b) a polymer capable of hydrogen bonding with the polyketone, that is, a polyvinylphenol, and wherein components (a) and (b) are blended in relative proportions by weight within a range of from 1:99 to 99:1 parts based on 100 parts of (a) and (b) combined.

The most preferred molecular miscible polyketone blend is based on 100 parts of a combined mixture of (a) and (b) prepared from 80 to 60 parts of (a) and, correspondingly, from 20 to 40 parts of (b). Blends of components (a) and (b) which are also usable can range in relative proportions from 40:60 to 60:40, or be of approximately equal proportions by weight, i.e. (a):(b) = 50:50.

Compositions comprising a mixture of polyketones and polyvinylphenol are within the scope of the present invention.

In these molecular miscible blends, suitable second polyketone polymers could be polyketone polymers having different molecular weights or different melting points from the principal polyketone polymer. For example, a polyketone having a low melting point (prepared from a polyketone having a larger termonomer content) can be added to the primary polyketone to provide a molecularly miscible blend of polyketone and polyvinylphenol.

Polyvinylphenols usable in the molecularly miscible polyketone blends preferably have the formula: 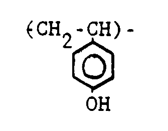
Such polymers are commercially available.

Other polyvinylphenols usable herein include copolymers of vinylphenols with other styrenic monomers wherein the mole fraction of vinyl phenol is greater than 0.5.

The present invention also relates to a process for preparing a polyketone polymer composition, which is characterized in involving the following steps:
(i) blending 1-99 parts by weight of polyvinylphenol with 99-1 parts by weight of a linear alternating polymer of carbon monoxide and an ethylenically unsaturated hydrocarbon,
(ii) feeding the blend of step (i) into an extruder,
(iii) extruding the blended polymers to obtain a homogeneous polyketone-polyvinylphenol composition.

### EXAMPLE

Blends were prepared by the following process: mixing together the desired parts of polyketone and the desired parts of the second polymer. The powders were mixed together in a plastic bag, though drums or tumblers would have been suitable too.

The blended powders were then poured into a feeder attached to a 15 mm co-rotating twin screw extruder. The feed rate could be set at different rates without affecting the resultant product. The extruder was run at 300 rpm.

The resulting extruded strand was quenched in water at room temperature, then fed into a chopper to form pellets.

Test specimens were prepared by drying the formed pellets in a vacuum oven at 40°C for about 8 hours. Pellets were then compression moulded into plaques between 0.127 and 0.762 mm in thickness at 245°C for 1½ minutes using a hydraulic press.

For tensile strength tests, the plaques were cut into microtensile specimens having a dumbbell shape similar to specimens formed using ASTM D1708 test dies.

For DSC testing, samples, typically 5 mm in diameter, were punched from the plaque.

The physical properties of the formulations tested are detailed in Table 1. The formulations were:

### Formulation A: (Control)

100% polyketone.

A linear alternating terpolymer of carbon monoxide, ethylene and propylene had been produced in the presence of a catalyst composition formed from palladium acetate, the anion of trifluoroacetic acid and 1,3-bis[bis(2-methoxyphenyl)phosphino]propane, according to procedures known in the art, and prepared for testing as the blends.

### Formulation B:

80% polyketone of formulation A and 20% polyvinylphenol of formulation E. The resulting blend had a uniform appearance. The extrudability of the blend was termed excellent.

### Formulation C:

60% polyketone of formulation A and 40% polyvinylphenol of formulation E.

### Formulation D:

40% polyketone of formulation A and 60% polyvinylphenol of formulation E.

### Formulation E: (Control)

100% polyvinylphenol.

This polymer was obtained from the Maruzen Petrochemical Company, under the Trade Mark Resin M.

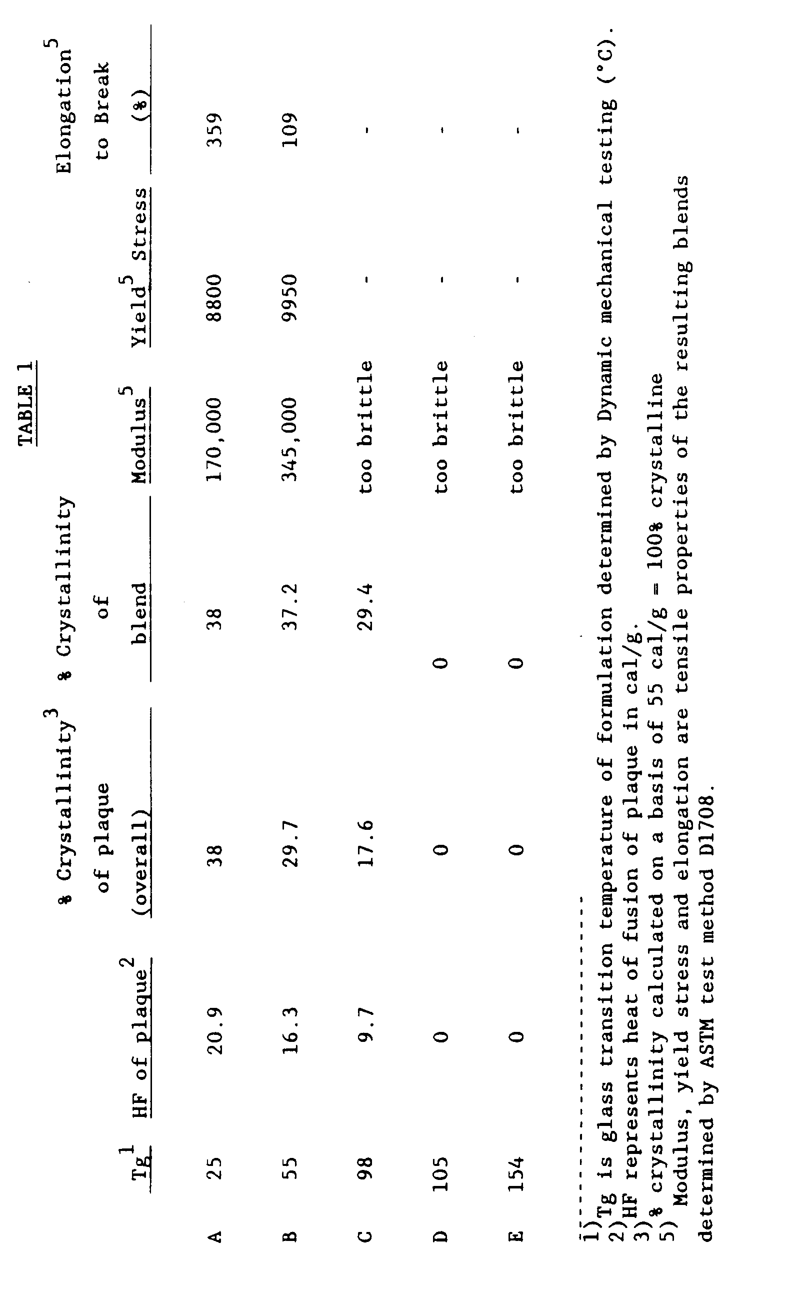

## Claims

1. Polyketone polymer composition characterized in comprising a molecularly miscible blend of polyvinylphenol with at least one linear alternating polymer of carbon monoxide and one or more ethylenically unsaturated hydrocarbons.

2. A composition as claimed in claim 1, characterized in comprising 1-99 parts by weight of polyvinylphenol and 99-1 parts by weight of the linear alternating polymer.

3. A composition as claimed in claim 2, characterized in comprising 20-40 parts by weight of polyvinylphenol and 80-60 parts by weight of the linear alternating polymer.

4. A composition as claimed in any of claims 1-3, characterized in that the linear alternating polymer is of the formula 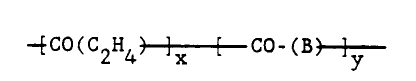 wherein B is the moiety of an ethylenically unsaturated hydrocarbon of 3-8 carbon atoms polymerized through the ethylenic unsaturation, and the ratio of y:x is no more than 0.5.

5. A composition as claimed in any of claims 1-4, characterized in that the polyvinylphenol is a copolymer of vinylphenol with a styrene comonomer, wherein the mole fraction of the vinylphenol is greater than 0.5.

6. Process for preparing a polyketone polymer composition, characterized in involving the following steps:
(i) blending 1-99 parts by weight of polyvinylphenol with 99-1 parts by weight of a linear alternating polymer of carbon monoxide and an ethylenically unsaturated hydrocarbon,
(ii) feeding the blend of step (i) into an extruder,
(iii) extruding the blended polymers to obtain a homogeneous polyketone-polyvinylphenol composition.

## Patentansprüche

1. Polyketonpolymer-Zusammensetzung, dadurch gekennzeichnet, daß sie molekular mengbare Mischungen von Polyvinylphenol mit mindestens einem linearen alternierenden Polymer aus Kohlenmonoxid und einem oder mehreren ethylenisch ungesättigten Kohlenwasserstoff(en) umfaßt.

2. Eine Zusammensetzung wie in Anspruch 1 beansprucht, dadurch gekennzeichnet, daß sie 1-99 Gewichtsteile Polyvinylphenol und 99-1 Gewichtsteile des linearen alternierenden Polymers umfaßt.

3. Eine Zusammensetzung wie in Anspruch 2 beansprucht, dadurch gekennzeichnet, daß sie 20-40 Gewichtsteile Polyvinylphenol und 80-60 Gewichtsteile des linearen alternierenden Polymers umfaßt.

4. Eine Zusammensetzung wie in irgendeinem der Ansprüche 1 bis 3 beansprucht, dadurch gekennzeichnet, daß das lineare alternierende Polymer die Formel 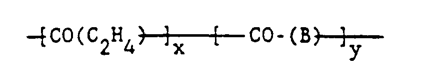 hat, in der B der Molekülbestandteil eines ethylenisch ungesättigten Kohlenwasserstoffs mit 3-8 Kohlenstoffatomen ist, polymerisiert durch die ethylenische Ungesättigtheit, und in der das Verhältnis von y:x nicht höher als 0,5 ist.

5. Eine Zusammensetzung wie in irgendeinem der Ansprüche 1 bis 4 beansprucht, dadurch gekennzeichnet, daß das Polyvinylphenol ein Copolymer von Vinylphenol mit einem styrolartigen Comonomer ist, wobei der Molenbruch des Vinylphenols höher als 0,5 ist.

6. Verfahren zur Herstellung einer Polyketonpolymer-Zusammensetzung, dadurch gekennzeichent, daß es folgende Schritte umfaßt:
(i) das Vermischen von 1-99 Gewichtsteilen von Polyvinylphenol mit 99-1 Gewichtsteilen eines linear alternierenden Polymers von Kohlenmonoxid und einem ethylenisch ungesättigten Kohlenwasserstoff,
(ii) das Zuspeisen der Mischung aus Schritt (i) zu einem Extruder,
(iii) das Extrudieren der gemischten Polymere, um eine homogene Polyketon-Polyvinylphenol-Zusammensetzung zu erhalten.

## Revendications

1. Composition de polymères de polycétone, caractérisée en ce qu'elle comporte un mélange miscible à l'échelle moléculaire de polyvinylphénol avec au moins un polymère alterné linéaire de monoxyde de carbone et d'un ou de plus d'un hydrocarbone à insaturation éthylénique.

2. Une composition, telle que revendiquée dans la revendication 1, caractérisée en ce qu'elle comporte de 1 à 99 parties en poids de polyvinylphénol et de 99 à 1 parties en poids du polymère alterné linéaire.

3. Une composition, telle que revendiquée dans la revendication 1, caractérisée en ce qu'elle comporte de 20 à 40 parties en poids de polyvinylphénol et de 80 à 60 parties en poids de polymère alterné linéaire.

4. Une composition, telle que revendiquée dans l'une quelconque des revendications 1 à 3, caractérisée en ce que le polymère alterné linéaire présente la formule : 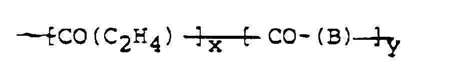 dans laquelle B la partie d'un hydrocarbone à insaturation éthylénique de 3 à 8 atomes de carbone, polymérisé par l'intermédiaire de l'insaturation éthylénique, et le rapport de y:x ne dépasse pas 0,5.

5. Une composition telle que revendiquée dans l'une quelconque des revendications 1 à 4, caractérisée en ce que le polyvinylphénol est un copolymère de type vinylphénol avec un comonomère de styrène, dans laquelle la fraction molaire du vinylphénol est supérieure à 0,5.

6. Procédé pour préparer une composition de polymère de polycétone, caractérisée en ce qu'il comporte les étapes suivantes :
(i) le mélange de 1 à 99 parties en poids de polyvinylphénol avec de 99 à 1 parties en poids d'un polymère alterné linéaire de monoxyde de carbone et d'un hydrocarbure à insaturation éthylénique.
(ii) Le transfert du mélange de l'étape (i) dans une extrudeuse,
(iii) l'extrusion des polymères mélangés afin d'obtenir une composition homogène de polycétone-polyvinylphénol.
